# EUROPEAN PATENT SPECIFICATION

(11) **EP 4 303 721 B1**
(45) Date of publication and mention of the grant of the patent: **02.07.2025**
(21) Application number: 23174506.8
(22) Date of filing: 22.05.2023
(51) Int. Cl.: G06F 8/65, B63H 20/00, B63H 21/21

(54) **METHOD OF REWRITING PROGRAMS OF PLURALITY OF ELECTRONIC DEVICES IN WATERCRAFT SYSTEM AND WATERCRAFT SYSTEM**
VERFAHREN ZUM UMSCHREIBEN VON PROGRAMMEN MEHRERER ELEKTRONISCHER VORRICHTUNGEN IN EINEM WASSERFAHRZEUGSYSTEM UND WASSERFAHRZEUGSYSTEM
PROCÉDÉ DE RÉÉCRITURE DE PROGRAMMES D'UNE PLURALITÉ DE DISPOSITIFS ÉLECTRONIQUES DANS UN SYSTÈME DE BATEAU ET SYSTÈME DE BATEAU

(30) Priority: 08.07.2022 JP 2022110636
(43) Date of publication of application: 10.01.2024
(73) Proprietor: Yamaha Hatsudoki Kabushiki Kaisha, Iwata-shi, Shizuoka 438-8501 (JP)
(72) Inventor: Bamba, Takaaki, Iwata-shi, Shizuoka, 4388501 (JP)
(74) Representative: Grünecker Patent- und Rechtsanwälte PartG mbB

(56) References cited:
- JP-B2- 6 221 866
- US-A1- 2005 256 614
- US-B2- 6 872 106

## Description

The present invention relates to a method of rewriting programs of a plurality of electronic devices in a watercraft system and also relates to a watercraft system.

US 2005/256614 A1 describes a method and system for remote reflash of electronic control units in vehicles. When a software update in the electronic control units of certain vehicles is desired, a software update package is prepared and transmitted to a telematics device in each of the vehicles. The software update package includes reflash execution instructions, and target ECU software as well as target ECU flash instructions for each of plural ECUs, an update of which is desired. The telematics device executes the reflash execution instructions, by transmitting and installing the respective target ECU software in the respective target ECUs.

A marine propulsion device such as an outboard motor is mounted to a watercraft. The marine propulsion device includes an electronic control device. device, as disclosed in US 6872106B2. The electronic control device is connected to a communication network such as a CAN (Controller Area Network). For example, as described in Japan Laid-open Patent Application Publication No. JP 2020-179748 A, when a program of an electronic control device is updated, a computer for rewriting the program is connected to the electronic control device through a communication network. The computer rewrites the program of the electronic control device by utilizing a rewriting protocol such as UDS (Unified Diagnostic Services). In this case, the computer specifies an identifier of the electronic control device and vice versa; accordingly, a peer-to-peer communication is established therebetween. Under the condition, data transmission and reception are made therebetween so as to rewrite the program.

There is a type of watercraft provided with a system including a plurality of marine propulsion devices. In the system described herein, a plurality of electronic control devices of the plurality of marine propulsion devices are connected to each other through a communication network. The electronic control devices are identical in function to each other but are identified as discrete devices in the communication network. Because of this, identifiers are uniquely assigned to the electronic control devices, respectively.

In the system including the marine propulsion devices as described above, when the programs of the electronic control devices are rewritten, the computer is configured to rewrite the programs of the electronic control devices, separately. Because of this, a length of time required for rewriting the programs inevitably increases with increase in number of the electronic control devices.

It is an object of the present invention to reduce a length of time required for rewriting programs of a plurality of electronic control devices in a system for a watercraft including a plurality of marine propulsion devices.

This is achieved by the features of the independent claims.

According to the present invention, the data for rewriting each of the programs are transmitted to each of the plural electronic control devices with the common identifier through the communication network. This results in reduction in length of time required for rewriting the programs of the plural electronic control devices. Besides, each of the plural electronic control devices determines whether or not to rewrite the program thereof. Because of this, the computer for rewriting the programs is not required to determine whether or not to rewrite the program in each of the plural electronic control devices; hence, the processing to be executed by the computer is simplified.

### BRIEF DESCRIPTION OF THE DRAWINGS

FIG. 1 is a schematic diagram showing a watercraft according to a preferred embodiment.
FIG. 2 is a side view of a marine propulsion device.
FIG. 3 is a schematic diagram showing a control system for the watercraft.
FIG. 4 is a flowchart showing a series of processing executed by a computer to rewrite a program of an ECU (Engine Control Unit).
FIG. 5 is a flowchart showing a series of processing executed by the computer to rewrite the program of the ECU.
FIG. 6 is a flowchart showing a series of processing executed by the ECU when the ECU receives a command to update the frequency of rewriting.

### DETAILED DESCRIPTION OF EMBODIMENTS

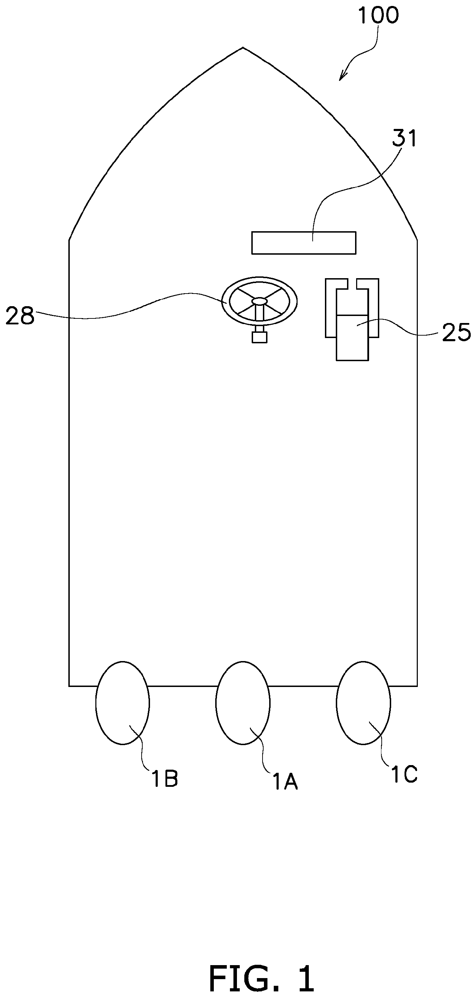

A preferred embodiment will be hereinafter explained with reference to drawings. FIG. 1 is a perspective view of a watercraft 100 according to the preferred embodiment. A plurality of marine propulsion devices 1Ato 1C are attached to the stern ofthe watercraft 100. Each ofthe marine propulsion devices 1A to 1C generates a thrust for propelling the watercraft 100. In the present preferred embodiment, the marine propulsion devices 1A to 1C are outboard motors. The marine propulsion devices 1Ato 1C include a first marine propulsion device 1A, a second marine propulsion device 1B, and a third marine propulsion device 1C.

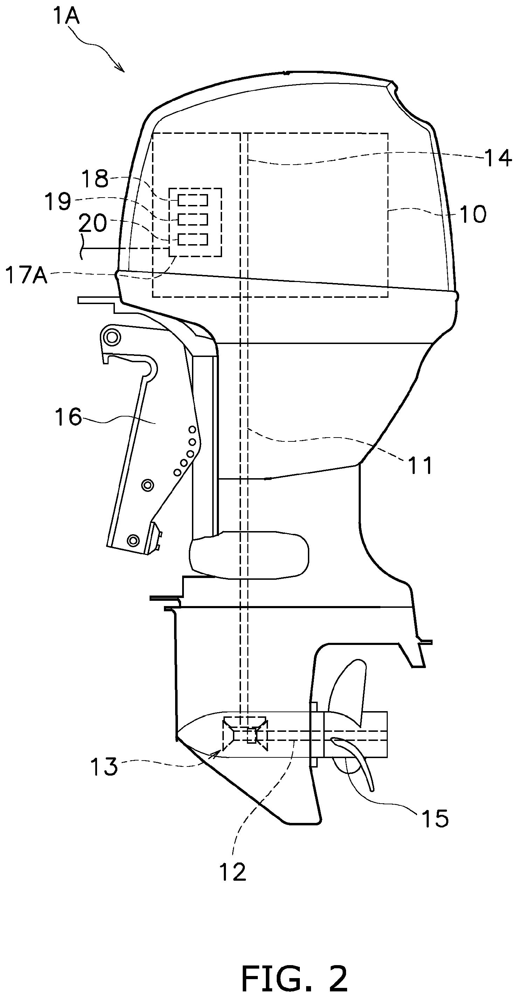

FIG. 2 is a side view of the first marine propulsion device 1A. As shown in FIG. 2, the first marine propulsion device 1A includes an engine 10, a drive shaft 11, a propeller shaft 12, and a shift mechanism 13. The engine 10 generates the thrust for propelling the watercraft 100. The engine 10 includes a crankshaft 14. The crankshaft 14 extends in the vertical direction. The drive shaft 11 is connected to the crankshaft 14. The drive shaft 11 extends in the vertical direction. The drive shaft 11 extends downward from the engine 10.

The propeller shaft 12 extends in the back-and-forth direction ofthe first marine propulsion device 1A. The propeller shaft 12 is connected to the drive shaft 11 through the shift mechanism 13. A propeller 15 is connected to the propeller shaft 12. The shift mechanism 13 switches the rotational direction of mechanical power to be transmitted from the drive shaft 11 to the propeller shaft 12. The shift mechanism 13 includes, for instance, a plurality of gears and a clutch that changes meshing of the gears. The first marine propulsion device 1A is attached to the watercraft 100 through a bracket 16.

The first marine propulsion device 1A includes a first ECU (Engine Control Unit) 17A. The first ECU 17A is an electronic control device for controlling the engine 10. The first ECU 17A includes a processor 18 such as a CPU (Central Processing Unit), a RAM (Random Access Memory) 19, and a flash ROM (Read Only Memory) 20. The flash ROM 20 stores programs for controlling the engine 10. The first ECU 17Ais programmed to electrically control the engine 10.

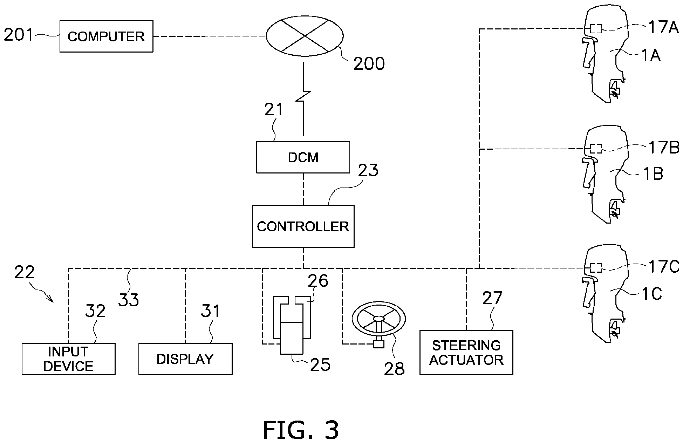

FIG. 3 is a schematic diagram showing a configuration of a watercraft system installed in the watercraft 100. As shown in FIG. 3, the second marine propulsion device 1B includes a second ECU 17B. The third marine propulsion device 1C includes a third ECU 17C. Each of the second and third ECUs 17B and 17C is similar in configuration and function to the first ECU 17A. The other constituent elements in each of the second and third marine propulsion devices 1B and 1C are similar to those in the first marine propulsion device 1A.

As shown in FIG. 3, the watercraft system includes a data communication module (hereinafter referred to as DCM) 21, a device system 22, and a controller 23. The DCM 21 performs wireless communication with an external computer 201. For example, the DCM 21 is capable of performing data transmission with the external computer 201 through a mobile communication network 200. The mobile communication network 200 is, for instance, a network of a 3G, 4G, or 5G mobile communication system.

The device system 22 includes electric devices installed in the watercraft 100. For example, the device system 22 includes the first to third ECUs 17A to 17C described above. The device system 22 includes a throttle-shift operating device 25. The throttle-shift operating device 25 is operable by an operator to regulate the rotational speed of the engine 10 in each of the first to third marine propulsion devices 1Ato 1C. Besides, the throttle-shift operating device 25 is operable by the operator to perform switching between a forward moving action and a rearward moving action by each of the first to third marine propulsion devices 1Ato 1C.

The throttle-shift operating device 25 includes a throttle lever 26. The throttle lever 26 is operable from a neutral position to a forward moving position and a rearward moving position. The throttle-shift operating device 25 outputs a throttle signal indicating the operating position of the throttle lever 26. Each ECU 17A, 17B, 17C receives the throttle signal from the throttle-shift operating device 25. Each ECU 17A, 17B, 17C controls the shift mechanism 13 relevant thereto in accordance with the operating position of the throttle lever 26. Accordingly, the rotational direction of the propeller shaft 12 relevant thereto is switched between a forward moving direction and a rearward moving direction. Besides, each ECUs 17A, 17B, 17C controls the rotational speed of the engine 10 relevant thereto depending on the operating position of the throttle lever 26.

The device system 22 includes a steering actuator 27 and a steering operating device 28. The steering actuator 27 turns each marine propulsion device 1A, 1B, 1C right and left so as to change the rudder angle of each marine propulsion device 1A, 1B, 1C. The steering actuator 27 is, for instance, an electric motor. Alternatively, the steering actuator 27 may include an electric pump and a hydraulic cylinder.

The steering operating device 28 is operable by the operator to adjust the rudder angle of each marine propulsion device 1A, 1B, 1C. The steering operating device 28 is, for instance, a steering wheel. Alternatively, the steering operating device 28 may be another type of operating device such as a joystick. The steering operating device 28 is operable right and left from a neutral position. The steering operating device 28 outputs a steering signal indicating the operating position thereof. The steering actuator 27 is controlled depending on the operating position of the steering operating device 28, whereby the rudder angle of each marine propulsion device 1A, 1B, 1C is controlled.

The device system 22 includes a display 31 and an input device 32. The display 31 displays information regarding each marine propulsion device 1A, 1B, 1C. The display 31 displays an image in accordance with an image signal inputted thereto. The input device 32 receives an operational input by a user. The input device 32 outputs an input signal indicating the operational input by the user. The input device 32 is, for instance, a touchscreen. However, the input device 32 may include at least one hardware key. The device system 22 includes a CAN (Controller Area Network) 33. The CAN 33 is a communication network that the electric devices, included in the device system 22, are connected therethrough to each other.

The controller 23 includes a processor such as a CPU and memories such as a RAM and a ROM. The controller 23 controls the device system 22. For example, the controller 23 controls the device system 22 in accordance with the input signal transmitted thereto from the input device 32. The controller 23 outputs the image signal to the display 31 so as to cause the display 31 to display a desired image. The device system 22 is connected to the DCM 21 through the controller 23.

A computer 201 is connected to the CAN 33 through the DCM 21. The computer 201 rewrites a program of each ECU 17A, 17B, 17C by utilizing a protocol for rewriting the program such as UDS (Unified Diagnostic Services). A series of processing for rewriting the program of each ECU 17A, 17B, 17C will be hereinafter explained.

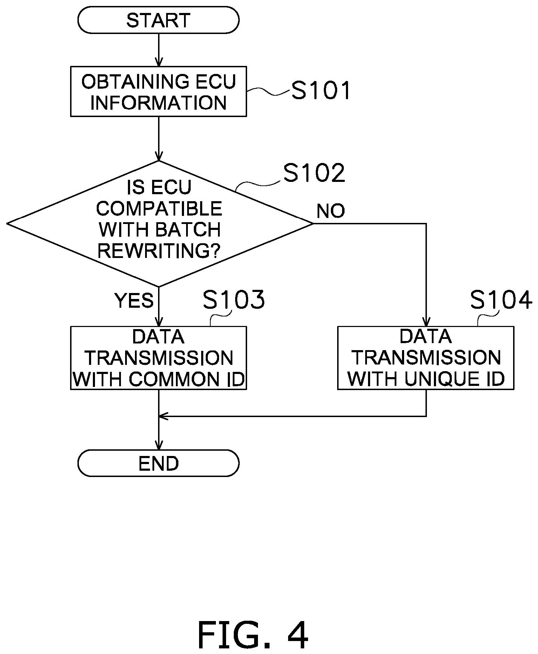

FIG. 4 is a flowchart showing a series of processing executed by the computer 201 to rewrite the program of each ECU 17A, 17B, 17C. As shown in FIG. 4, in step S101, the computer 201 obtains ECU information from each ECU 17A, 17B, 17C. The ECU information includes the protocol version, the frequency of rewriting the program, and the serial number of each ECU 17A, 17B, 17C. It should be noted that the computer 201 herein obtains the ECU information by another communication protocol different from the rewriting protocol in the CAN 33 described above. In another communication protocol herein described, IDs are set for a plurality of ECUs so as to distinguish the ECUs from one another even when the ECUs are of an identical type. For instance, SAE J1939 may be employed as another communication protocol herein described. This is because, when receiving multiple packet responses from the ECUs 17A to 17C in communication under the rewriting protocol, the computer 201 cannot correctly distinguish the responses from the ECUs 17A to 17C from one another.

In step S102, the computer 201 determines whether or not each ECU 17A, 17B, 17C is compatible with batch rewriting. The computer 201 determines whether or not each ECU 17A, 17B, 17C is compatible with the batch rewriting based on the version of the protocol of each ECU 17A, 17B, 17C.

When each ECU 17A, 17B, 17C is compatible with the batch rewriting, the processing proceeds to step S103. In step S103, the computer 201 transmits data for rewriting the program of each ECU 17A, 17B, 17C to each ECU 17A, 17B, 17C with a common identifier for the batch rewriting. The common identifier has been preliminarily set to each ECU 17A, 17B, 17C having a protocol version compatible with the batch rewriting.

When each ECU 17A, 17B, 17C is incompatible with the batch rewriting in step S102, the processing proceeds to step S104. In step S104, the computer 201 transmits the data for rewriting the program to each ECU 17A, 17B, 17C with a unique identifier for discrete rewriting. The unique identifier has been preliminarily assigned and set to each ECU 17A, 17B, 17C having a protocol version incompatible with the batch rewriting.

For example, when determining that the first and second ECUs 17A and 17B are compatible with the batch rewriting, the computer 201 simultaneously transmits the data for rewriting the program to the first and second ECUs 17A and 17B with an identifier common to the first and second ECUs 17A and 17B. On the other hand, when determining that the third ECU 17C is incompatible with the batch rewriting, the computer 201 transmits the data for rewriting the program to the third ECU 17C with an identifier uniquely assigned to the third ECU 17C. In other words, the computer 201 separately executes data transmission to the first and second ECUs 17A and 17B with the common identifier and data transmission to the third ECU 17C with the unique identifier.

Alternatively, when determining that all the first to third ECUs 17A to 17C are compatible with the batch rewriting, the computer 201 simultaneously transits the data for rewriting the program to the first to third ECUs 17A to 17C with an identifier common to the first to third ECUs 17A to 17C. Contrarily, when determining that all the first to third ECUs 17A to 17C are incompatible with the batch rewriting, the computer 201 sequentially transmits the data for rewriting the program to the first to third ECUs 17A to 17C with identifiers uniquely assigned to the first to third ECUs 17A to 17C, respectively.

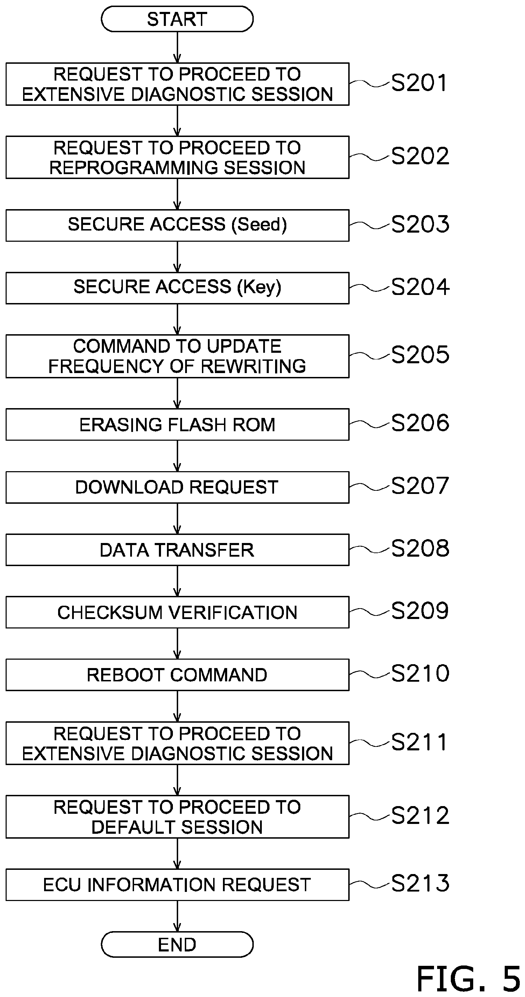

When given ECUs are compatible with the batch rewriting, the computer 201 executes a series of processing shown in FIG. 5 to transmit data to the given ECUs with an identifier common to the given ECUs. In the following explanation, it is assumed that the first and second ECUs 17A and B are compatible with the batch rewriting, whereas the third ECU 17C is incompatible with the batch rewriting.

As shown in FIG. 5, in step S201, the computer 201 transmits a request to proceed to an extensive diagnostic session to each ECU 17A, 17B. In step S202, the computer 201 transmits a request to proceed to a reprogramming session to each ECU 17A, 17B.

In step S203, the computer 201 transmits "Seed" for secure access to each ECU 17A, 17B. In step S204, the computer 201 transmits "Key" for secure access to each ECU 17A, 17B. It should be noted that the Key is processed as an error in a given ECU other than each ECU 17A, 17B associated with the Key; hence, the number of Keys transmitted from the computer 201 is equal to the number of the ECUs 17A and 17B associated with the Keys. Besides, the ECUs 17A and 17B allow errors to occur at a frequency of "the number of ECUs - 1".

In step S205, the computer 201 transmits a command to update the frequency of rewriting. The computer 201 transmits, not a specific value of frequency, but a command to increase by one the frequency of rewriting, to each ECU 17A, 17B.

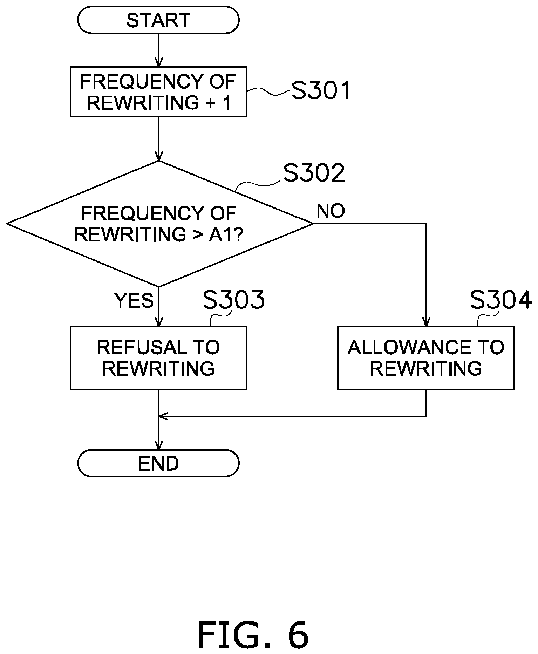

FIG. 6 is a flowchart showing a series of processing executed by each ECU 17A, 17B when each ECU 17A, 17B receives the command to update the frequency of rewriting. For example, suppose the first ECU 17A receives the command to update the frequency of rewriting. As shown in FIG. 6, the first ECU 17A increases by one the frequency of rewriting executed therein in step S301. When the upper limit is set for the frequency of rewriting in the ECU 17A, the first ECU 17A determines whether or not the frequency of rewriting is greater than a set value A1 in step S302.

When the first ECU 17A determines that the frequency of rewriting is greater than the set value A1 in step S302, the processing proceeds to step S303. In step S303, the first ECU 17A refuses to rewrite the program. In this case, the first ECU 17A transmits a negative response to the computer 201. When receiving the negative response from the first ECU 17A, the computer 201 determines that the program is not rewritable in the first ECU 17A.

When the first ECU 17A determines that the frequency of rewriting is not greater than the set value A1 in step S302, the processing proceeds to step S304. In step S304, the first ECU 17A accepts rewriting of the program. In this case, the first ECU 17A transmits a positive response to the computer 201. It should be noted that, even when the upper limit is not set for the frequency of rewriting in the first ECU 17A, the first ECU 17A transmits the positive response to the computer 201. When receiving the positive response from the first ECU 17A, the computer 201 determines that the program is rewritable in the first ECU 17A. Likewise, the second ECU 17B executes the series of processing described above, when receiving the command to update the frequency of rewriting.

In step S206, the computer 201 transmits a command to erase the flash ROM to each ECU 17A, 17B. It should be noted that a given ECU, in which the program is not rewritable, transmits a negative response with respect to the series of processing in step S206 and thereafter, whereas only another ECU, in which the program is rewritable, continues executing the series of processing in step S206 and thereafter.

In step S207, the computer 201 transmits a download request to each ECU 17A, 17B. When there is a difference in response to the download request between the ECUs 17A and 17B (e.g., a difference in volume of acceptable data or a difference in request for intervals of communication time), the computer 201 executes data transfer in accordance with the loosest one of the conditions obtained from the responses. Besides, each ECU 17A, 17B transmits a response based on the volume of data transmission declared by the computer 201. In short, the computer 201 does not execute processing depending on a value requested by each ECU 17A, 17B.

In step S208, the computer 201 transmits updated program data to each ECU 17A, 17B. Each ECU 17A, 17B rewrites the program based on the received program data. For example, when accepting to rewrite the program, the first ECU 17A rewrites the program based on the program data received from the computer 201. When refusing to rewrite the program, the first ECU 17A does not rewrite the program.

When transmission of the program data is completed, the computer 201 transmits a checksum verification to each ECU 17A, 17B in step S209. In step S210, the computer 201 transmits a reboot command to each ECU 17A, 17B. In step S211, the computer 201 transmits a request to proceed to an extensive diagnostic session to each ECU 17A, 17B. In step S212, the computer 201 transmits a request to proceed to a default session to each ECU 17A, 17B.

In step S213, the computer 201 transmits an ECU information request to each ECU 17A, 17B. In similar manner to step S101 described above, the computer 201 herein obtains the ECU information with another communication protocol different from the rewriting protocol in the CAN 33.

It should be noted that each ECU 17A, 17B transmits a response with respect to each processing described above; then, the computer 201 executes the following processing after receiving the response from each ECU 17A, 17B. When any kind of error occurs in either the ECU 17A or the ECU 17B in the series of processing executed before the processing step of erasing the flash ROM, the computer 201 determines that the program is not rewritable in the ECU in which any kind of error occurs but continues executing the batch rewriting. On the other hand, even when any kind of error occurs in either the ECU 17A or the ECU 17B in the series of processing at and after the processing step of erasing the flash ROM, the computer 201 executes the batch rewriting till the end. In other words, when a given ECU has a chance of success of rewriting, the computer 201 executes the series of processing with respect to the given ECU till the end of rewriting. Accordingly, occurrence of damage or breakage of software can be inhibited in each ECU 17A, 17B.

The computer 201 transmits data to the third ECU 17C incompatible with the batch rewriting with an identifier uniquely assigned to the third ECU 17C in a series of processing similar to that described above.

In the watercraft system according to the present preferred embodiment explained above, the data for rewriting the program are transmitted to each of the plural ECUs 17A and 17B with the common identifier through the CAN 33. Because of this, rewriting of the program is simultaneously executed with respect to the ECUs 17A and 17B compatible with the batch rewriting. This results in reduction in length of time required for rewriting the programs of the plural ECUs 17A and 17B. Besides, when the plural ECUs 17A to 17C include not only one or more ECUs compatible with the batch rewriting but also one or more ECUs incompatible with the batch rewriting, the discrete rewriting of the program can be executed with respect to the one or more ECUs incompatible with the batch rewriting.

Each of the plural ECUs 17A and 17B determines whether or not to rewrite the program thereof. Because of this, the computer 201 is not required to determine whether or not to rewrite the program in each of the plural ECUs 17A and 17B; hence, the processing to be executed by the computer 201 is simplified.

One preferred embodiment of the present invention has been explained above. However, the present invention is not limited to the preferred embodiment described above, and a variety of changes can be made within the scope of the appended claims

Each marine propulsion device 1A, 1B, 1C is not limited to the outboard motor, and alternatively, may be another type of propulsion device such as an inboard engine outboard drive or a jet propulsion device. The structure of each marine propulsion device 1A, 1B, 1C is not limited to that in the preferred embodiment described above and may be changed. For example, each marine propulsion device 1A, 1B, 1C may include an electric motor instead of the engine.

The number of marine propulsion devices is not limited to three. The number of marine propulsion devices may be more than three. The electronic control device is not limited to the ECU described above and may be changed. For example, when each marine propulsion device includes an electric motor as a drive source, the electronic control device may be a motor controller for controlling the electric motor.

The condition for rewriting the program is not limited to that the frequency of rewriting the program has not reached the set value. Another condition may be set as an additional condition for rewriting the program. For example, a condition that at least one of the marine propulsion devices is not in operation or a condition that a voltage applied to each ECU is greater than or equal to a predetermined value may be set as an additional condition for rewriting the program.

In the preferred embodiment described above, the computer 201 is connected to the CAN 33 through the mobile communication network 200. However, the computer 201 may be connected to the CAN 33 through a wired communication or a short-range wireless communication including a WLAN (wireless local area network), Bluetooth (registered trademark), or so forth.

### REFERENCE SIGNS LIST

- 1A: First marine propulsion device

- 1B: Second marine propulsion device
- 1C: Third marine propulsion device
- 17A: First ECU
- 17B: Second ECU
- 17C: Third ECU
- 33: CAN
- 201: Computer

## Claims

1. A method of rewriting a program of a first electronic control device (17A), a program of a second electronic control device (17B), and a program of a third electronic control device (17C),
the first electronic control device (17A), the second electronic control device (17B), and the third electronic control device (17C) are in a watercraft system, the watercraft system including a first marine propulsion device (1A), a second marine propulsion device (1B), a third marine propulsion device (1C), and a communication network (33), the first marine propulsion device (1A) including the first electronic control device (17A), the second marine propulsion device (1B) including the second electronic control device (17B), the third marine propulsion device (1C) including a third electronic control device (17C), the communication network (33) connecting the first electronic control device (17A), the second electronic control device (17B), and the third electronic control device (17C) therethrough and wirelessly connects the watercraft system with an external computer (201);
the computer (201) is configured to perform
the method comprising:
obtaining (S101) a version of a protocol for rewriting each of the programs of the first, second, and third electronic control devices (17A, 17B, 17C) from the each of the first, second, and third electronic control devices (17A, 17B, 17C);
determining (S102) whether or not each of the first, second, and third electronic control devices (17A, 17B, 17C) is compatible with batch rewriting of the program of the first electronic control device (17A), the program of the second electronic control device (17B), and the program of the third electronic control device (17C) with a common identifier, based on the version of the protocol thereof;
transmitting (S103) the data for rewriting the each of the programs to those of the first, second, and third electronic control devices (17A, 17B, 17C) with the common identifier, which are determined to be compatible with the batch rewriting (S102: YES); and
transmitting (S104) data for rewriting the program of an electronic control device which is determined to be incompatible with the batch rewriting (S102: NO) to the electronic control device which is determined to be incompatible with the batch rewriting, with an identifier uniquely assigned to the electronic control device which is determined to be incompatible with the batch rewriting, so as to be different from the common identifier.

2. The method according to claim 1, further comprising:
causing the each of the first and second electronic control devices (17A, 17B) to determine whether or not a predetermined rewriting condition is satisfied therein;
causing the each of the first and second electronic control devices (17A, 17B) to determine to rewrite the program thereof when the predetermined rewriting condition is satisfied therein; and
causing the each of the first and second electronic control devices (17A, 17B) to determine not to rewrite the program thereof when the predetermined rewriting condition is not satisfied therein.

3. The method according to claim 2, wherein the predetermined rewriting condition is one of a plurality of rewriting conditions including that a frequency of rewriting the each of the programs has not reached a set value.

4. A watercraft system comprising:
a first marine propulsion device (1A) including a first electronic control device (17A);
a second marine propulsion device (1B) including a second electronic control device (17B);
a third marine propulsion device (1C) including a third electronic control device (17C);
a communication network (33) connecting the first electronic control device (17A), and second electronic control device (17B), and the third electronic control device (17C) therethrough; and
a computer (201) wirelessly connected to the communication network (33), the computer (201) being configured to rewrite a program of the first electronic control device (17A), a program of the second electronic control device (17B), and a program of the third electronic control device(17C), wherein
the computer (201) is configured to transmit data for rewriting each of the programs to each of the first, second, and third electronic control devices (17A, 17B, 17C) through the communication network (33),
each of the first, the second, and the third electronic control device (17A) is configured to
receive the data and execute rewriting the program thereof when determining to rewrite the program thereof,
the computer (201) is configured to
obtain a version of a protocol for rewriting each of the programs of the first, second, and third electronic control devices (17A, 17B, 17C) from the each of the first, second, and third electronic control devices (17A, 17B, 17C), determine whether or not each of the first, second, and third electronic control devices (17A, 17B, 17C) is compatible with batch rewriting of the program of the first electronic control device (17A), the program of the second electronic control device (17B), and the program of the third electronic control device (17C) with a common identifier based on the version of the protocol thereof,
transmit the data for rewriting the each of the programs to those of the first, second, and third electronic control devices (17A, 17B, 17C) with the common identifier, which are compatible with the batch rewriting,
transmit data for rewriting the program of an electronic control device which is determined to be incompatible with the batch rewriting to the electronic control device which is determined to be incompatible with the batch rewriting, with an identifier uniquely assigned to the electronic control device which is determined to be incompatible with the batch rewriting, so as to be different from the common identifier.

5. The watercraft system according to claim 4, wherein
the each of the first and second electronic control devices (17A, 17B) is configured to
determine whether or not a predetermined rewriting condition is satisfied therein,
determine to rewrite the program thereof when the predetermined rewriting condition is satisfied therein, and
determine not to rewrite the program thereof when the predetermined rewriting condition is not satisfied therein.

6. The watercraft system according to claim 5, wherein the predetermined rewriting condition is one of a plurality of rewriting conditions including that a frequency of rewriting the each of the programs has not reached a set value.

## Patentansprüche

1. Ein Verfahren zum Umschreiben eines Programms einer ersten elektronischen Steuervorrichtung (17A), eines Programms einer zweiten elektronischen Steuervorrichtung (17B) und eines Programms einer dritten elektronischen Steuervorrichtung (17C),
wobei die erste elektronische Steuervorrichtung (17A), die zweite elektronische Steuervorrichtung (17B) und die dritte elektronische Steuervorrichtung (17C) in einem Wasserfahrzeugsystem angeordnet sind, wobei das Wasserfahrzeugsystem eine erste Marineantriebsvorrichtung (1A), eine zweite Marineantriebsvorrichtung (1B), eine dritte Marineantriebsvorrichtung (1C) und ein Kommunikationsnetzwerk (33) enthält, wobei die erste Marineantriebsvorrichtung (1A) die erste elektronische Steuervorrichtung (17A) enthält, die zweite Marineantriebsvorrichtung (1B) die zweite elektronische Steuervorrichtung (17B) enthält, die dritte Marineantriebsvorrichtung (1C) eine dritte elektronische Steuervorrichtung (17C) enthält, wobei das Kommunikationsnetzwerk (33) die erste elektronische Steuervorrichtung (17A), die zweite elektronische Steuervorrichtung (17B) und die dritte elektronische Steuervorrichtung (17C) dadurch verbindet und das Wasserfahrzeugsystem drahtlos mit einem externen Computer (201) verbindet;
wobei der Computer (201) konfiguriert ist, das Verfahren durchzuführen, das umfasst:
Erhalten (S101) einer Version eines Protokolls zum Umschreiben jedes der Programme der ersten, zweiten und dritten elektronischen Steuervorrichtungen (17A, 17B, 17C) von jeder der ersten, zweiten und dritten elektronischen Steuervorrichtungen (17A, 17B, 17C);
Bestimmen (S102), ob jede der ersten, zweiten und dritten elektronischen Steuervorrichtungen (17A, 17B, 17C) mit dem Batch-Umschreiben des Programms der ersten elektronischen Steuervorrichtung (17A), des Programms der zweiten elektronischen Steuervorrichtung (17B) und des Programms der dritten elektronischen Steuervorrichtung (17C) mit einem gemeinsamen Identifikator kompatibel ist oder nicht, auf Grundlage der Version des Protokolls davon;
Übertragen (S103) der Daten zum Umschreiben jedes der Programme an diejenigen der ersten, zweiten und dritten elektronischen Steuervorrichtungen (17A, 17B, 17C) mit dem gemeinsamen Identifikator, die als mit dem Batch-Umschreiben (S102: JA) kompatibel bestimmt werden; und
Übertragen (S104) von Daten zum Umschreiben des Programms einer elektronischen Steuervorrichtung, die als mit dem Batch-Umschreiben (S102: NEIN) inkompatibel bestimmt wird, an die elektronische Steuervorrichtung, die als mit dem Batch-Umschreiben inkompatibel bestimmt wird, mit einem Identifikator, der der elektronischen Steuervorrichtung, die als mit dem Batch-Umschreiben inkompatibel bestimmt wird, einzigartig zugewiesen ist, so dass sie sich von dem gemeinsamen Identifikator unterscheidet.

2. Das Verfahren nach Anspruch 1, das ferner umfasst:
Veranlassen, dass jede der ersten und zweiten elektronischen Steuervorrichtungen (17A, 17B) bestimmt, ob eine vorbestimmte Ümschreibungsbedingung darin erfüllt ist oder nicht;
Veranlassen, dass jede der ersten und zweiten elektronischen Steuervorrichtungen (17A, 17B) bestimmt, das Programm davon umzuschreiben, wenn die vorbestimmte Überschreibungsbedingung darin erfüllt ist; und
Veranlassen, dass jede der ersten und zweiten elektronischen Steuervorrichtungen (17A, 17B) bestimmt, das Programm davon nicht umzuschreiben, wenn die vorbestimmte Umschreibungsbedingung darin nicht erfüllt ist.

3. Das Verfahren nach Anspruch 2, wobei die vorbestimmte Umschreibungsbedingung eine von einer Vielzahl von Umschreibungsbedingungen ist, die enthalten, dass eine Frequenz des Umschreibens jedes der Programme einen eingestellten Wert nicht erreicht hat.

4. Ein Wasserfahrzeugsystem, umfassend:
eine erste Marineantriebsvorrichtung (1A), die eine erste elektronische Steuervorrichtung (17A) enthält;
eine zweite Marineantriebsvorrichtung (1B), die eine zweite elektronische Steuervorrichtung (17B) enthält;
eine dritte Marineantriebsvorrichtung (1C), die eine dritte elektronische Steuervorrichtung (17C) enthält;
ein Kommunikationsnetzwerk (33), das die erste elektronische Steuervorrichtung (17A) und die zweite elektronische Steuervorrichtung (17B) und die dritte elektronische Steuervorrichtung (17C) dadurch verbindet; und
einen Computer (201), der drahtlos mit dem Kommunikationsnetzwerk (33) verbunden ist, wobei der Computer (201) so konfiguriert ist, dass er ein Programm der ersten elektronischen Steuervorrichtung (17A), ein Programm der zweiten elektronischen Steuervorrichtung (17B) und ein Programm der dritten elektronischen Steuervorrichtung (17C) umschreibt, wobei
der Computer (201) so konfiguriert ist, dass er Daten zum Umschreiben jedes der Programme an jede der ersten, zweiten und dritten elektronischen Steuervorrichtungen (17A, 17B, 17C) durch das Kommunikationsnetzwerk (33) überträgt,
jede der ersten, der zweiten und der dritten elektronischen Steuervorrichtungen (17A) so konfiguriert ist, dass sie
die Daten empfängt und das Umschreiben des Programms davon ausführt, wenn sie bestimmt, das Programm davon umzuschreiben,
der Computer (201) so konfiguriert ist, dass er
eine Version eines Protokolls zum Umschreiben jedes der Programme der ersten, zweiten und dritten elektronischen Steuervorrichtung (17A, 17B, 17C) von jeder der ersten, zweiten und dritten elektronischen Steuervorrichtungen (17A, 17B, 17C) erhält, bestimmt, ob jede von der ersten, zweiten und dritten elektronischen Steuervorrichtungen (17A, 17B, 17C) mit dem Batch-Umschreiben des Programms der ersten elektronischen Steuervorrichtung (17A), des Programms der zweiten elektronischen Steuervorrichtung (17B) und des Programms der dritten elektronischen Steuervorrichtung (17C) mit einem gemeinsamen Identifikator kompatible ist oder nicht, auf Grundlage der Version des Protokolls davon,
die Daten zum Umschreiben jedes der Programme an diejenigen der ersten, zweiten und dritten elektronischen Steuervorrichtungen (17A, 17B, 17C) mit dem gemeinsamen Identifikator überträgt, die mit dem Batch-Umschreiben kompatibel sind,
die Daten zum Umschreiben des Programms einer elektronischen Steuervorrichtung, die als mit dem Batch-Umschreiben inkompatibel bestimmt wird, an die elektronische Steuervorrichtung, die als mit dem Batch-Umschreiben inkompatibel bestimmt wird, mit einem Identifikator, der der elektronischen Steuervorrichtung, die als mit dem Batch-Umschreiben inkompatibel bestimmt wird, einzigartig zugewiesen ist, sodass sie sich von dem gemeinsamen Identifikator unterscheidet.

5. Das Wasserfahrzeugsystem nach Anspruch 4, wobei
jede der ersten und zweiten elektronischen Steuervorrichtungen (17A, 17B) so konfiguriert ist, dass
sie bestimmt, ob eine vorbestimmte Umschreibungsbedingung darin erfüllt ist,
sie bestimmt, das Programm davon umzuschreiben, wenn die vorbestimmte Umschreibungsbedingung darin erfüllt ist, und
sie bestimmt, das Programm davon nicht umzuschreiben, wenn die vorbestimmte Umschreibungsbedingung darin nicht erfüllt ist.

6. Das Wasserfahrzeugsystem nach Anspruch 5, wobei die vorbestimmte Umschreibungsbedingung eine von einer Vielzahl von Umschreibungsbedingungen ist, die enthalten, dass eine Frequenz des Umschreibens jedes der Programme einen eingestellten Wert nicht erreicht hat.

## Revendications

1. Procédé de réécriture d'un programme d'un premier dispositif de contrôle électronique (17A), d'un programme d'un deuxième dispositif de contrôle électronique (17B) et d'un programme d'un troisième dispositif de contrôle électronique (17C), dans lequel
le premier dispositif de contrôle électronique (17A), le deuxième dispositif de contrôle électronique (17B) et le troisième dispositif de contrôle électronique (17C) se trouvent dans un système d'embarcation, le système d'embarcation incluant un premier dispositif de propulsion marine (1A), un deuxième dispositif de propulsion marine (1B), un troisième dispositif de propulsion marine (1C) et un réseau de communication (33), le premier dispositif de propulsion marine (1A) incluant le premier dispositif de contrôle électronique (17A), le deuxième dispositif de propulsion marine (1B) incluant le deuxième dispositif de contrôle électronique (17B), le troisième dispositif de propulsion marine (1C) incluant un troisième dispositif de contrôle électronique (17C), le réseau de communication (33) connectant entre eux le premier dispositif de contrôle électronique (17A), le deuxième dispositif de contrôle électronique (17B) et le troisième dispositif de contrôle électronique (17C) et connectant sans fil le système d'embarcation à un ordinateur externe (201) ;
l'ordinateur (201) est configuré pour exécuter le procédé comprenant :
l'obtention (S101) d'une version d'un protocole pour réécrire chacun des programmes des premier, deuxième et troisième dispositifs de contrôle électronique (17A, 17B, 17C) à partir de chacun desdits premier, deuxième et troisième dispositifs de contrôle électronique (17A, 17B, 17C) ;
la détermination (S102) du fait que chacun des premier, deuxième et troisième dispositifs de contrôle électronique (17A, 17B, 17C) est compatible ou non avec une réécriture par lots du programme du premier dispositif de contrôle électronique (17A), du programme du deuxième dispositif de contrôle électronique (17B) et du programme du troisième dispositif de contrôle électronique (17C) avec un identifiant commun, sur la base de la version de leur protocole ;
la transmission (S103) des données pour réécrire chacun desdits programmes sur ceux des premier, deuxième et troisième dispositifs de contrôle électroniques (17A, 17B, 17C) avec l'identifiant commun, qui sont déterminés comme étant compatibles avec la réécriture par lots (S102 : OUI) ; et
la transmission (S104) de données pour réécrire le programme d'un dispositif de contrôle électronique qui est déterminé comme étant incompatible avec la réécriture par lots (S102 : NON) au dispositif de contrôle électronique qui est déterminé comme étant incompatible avec la réécriture par lots, avec un identifiant attribué de manière unique au dispositif de contrôle électronique qui est déterminé comme étant incompatible avec la réécriture par lots, de manière à être différent de l'identifiant commun.

2. Procédé selon la revendication 1, comprenant en outre :
la commande à chacun desdits premier et deuxième dispositifs de contrôle électronique (17A, 17B) de déterminer si une condition de réécriture prédéterminée y est satisfaite ou non ;
la commande à chacun desdits premier et deuxième dispositifs de contrôle électronique (17A, 17B) de déterminer de réécrire son programme quand la condition de réécriture prédéterminée y est satisfaite ; et
la commande à chacun desdits premier et deuxième dispositifs de contrôle électronique (17A, 17B) de déterminer de ne pas réécrire son programme quand la condition de réécriture prédéterminée n'y est pas satisfaite.

3. Procédé selon la revendication 2, dans lequel la condition de réécriture prédéterminée est une condition d'une pluralité de conditions de réécriture incluant le fait qu'une fréquence de réécriture de chacun desdits programmes n'a pas atteint une valeur de consigne.

4. Système d'embarcation comprenant :
un premier dispositif de propulsion marine (1A) incluant un premier dispositif de contrôle électronique (17A) ;
un deuxième dispositif de propulsion marine (1B) incluant un deuxième dispositif de contrôle électronique (17B) ;
un troisième dispositif de propulsion marine (1C) incluant un troisième dispositif de contrôle électronique (17C) ;
un réseau de communication (33) connectant entre eux le premier dispositif de contrôle électronique (17A), le deuxième dispositif de contrôle électronique (17B) et le troisième dispositif de contrôle électronique (17C) ; et
un ordinateur (201) connecté sans fil au réseau de communication (33), l'ordinateur (201) étant configuré pour réécrire un programme du premier dispositif de contrôle électronique (17A), un programme du deuxième dispositif de contrôle électronique (17B) et un programme du troisième dispositif de contrôle électronique (17C), dans lequel
l'ordinateur (201) est configuré pour transmettre des données pour réécrire chacun des programmes à chacun des premier, deuxième et troisième dispositifs de contrôle électronique (17A, 17B, 17C) via le réseau de communication (33),
chacun des premier, deuxième et troisième dispositifs de contrôle électronique (17A) étant configuré pour recevoir les données et exécuter la réécriture de leur programme lorsqu'il est déterminé de réécrire leur programme,
l'ordinateur (201) étant configuré pour
obtenir une version d'un protocole de réécriture de chacun des programmes des premier, deuxième et troisième dispositifs de contrôle électronique (17A, 17B, 17C) à partir de chacun desdits premier, deuxième et troisième dispositifs de contrôle électronique (17A, 17B, 17C),
déterminer si chacun des premier, deuxième et troisième dispositifs de contrôle électronique (17A, 17B, 17C) est compatible ou non avec la réécriture par lots du programme du premier dispositif de contrôle électronique (17A), du programme du deuxième dispositif de contrôle électronique (17B) et du programme du troisième dispositif de contrôle électronique (17C) avec un identifiant commun sur la base de la version de leur protocole,
transmettre les données pour réécrire chacun desdits programmes à ceux des premier, deuxième et troisième dispositifs de contrôle électronique (17A, 17B, 17C) avec l'identifiant commun, qui sont compatibles avec la réécriture par lots,
transmettre des données pour réécrire le programme d'un dispositif de contrôle électronique qui est déterminé comme étant incompatible avec la réécriture par lots au dispositif de contrôle électronique qui est déterminé comme étant incompatible avec la réécriture par lots, avec un identifiant attribué de manière unique au dispositif de contrôle électronique qui est déterminé comme étant incompatible avec la réécriture par lots, de manière à être différent de l'identifiant commun.

5. Système d'embarcation selon la revendication 4, dans lequel
chacun desdits premier et deuxième dispositifs de contrôle électronique (17A, 17B) est configuré pour
déterminer si une condition de réécriture prédéterminée y est satisfaite ou non,
déterminer de réécrire son programme quand la condition de réécriture prédéterminée y est satisfaite, et
décider de ne pas réécrire son programme quand la condition de réécriture prédéterminée n'y est pas satisfaite.

6. Système d'embarcation selon la revendication 5, dans lequel la condition de réécriture prédéterminée est une condition d'une pluralité de conditions de réécriture incluant le fait qu'une fréquence de réécriture de chacun desdits programmes n'a pas atteint une valeur de consigne.
